# EUROPÄISCHE PATENTANMELDUNG

(11) **EP 2 803 443 A1**
(43) Veröffentlichungstag der Anmeldung: **19.11.2014**
(21) Anmeldenummer: 13405061.6
(22) Anmeldetag: 17.05.2013
(51) Int. Cl.: B23Q 1/58, B23Q 5/28, B23Q 5/36, F16M 7/00, F16H 25/18

(54) **Höhenverstellbare Vorrichtung**

(71) Anmelder: J. Schneeberger Maschinen Holding AG, 4914 Roggwil (CH)
(72) Erfinder: Schneeberger, Jürg, 4900 Langenthal (CH)
(74) Vertreter: Stäbler, Roman

(57) **Zusammenfassung**

Bei einer verstellbaren Vorrichtung mit einem Tisch, einer Basis, einem Mittelteil und einem Antrieb, bei welcher das Mittelteil in Bezug auf die Basis in einer ersten Richtung beweglich gelagert und der Antrieb zur Erzeugung einer Relativbewegung zwischen Mittelteil und Tisch ausgebildet ist, umfasst das Mittelteil auf einer dem Tisch zugewandten Seite einen ersten Abschnitt mit einer Steigung grösser als Null und der Tisch auf einer dem Mittelteil zugewandten Seite einen dem ersten Abschnitt gegenüberliegenden zweiten Abschnitt mit einer negativen Steigung. Zudem ist der Tisch derart gelagert, dass er ausschliesslich eine Bewegung in einer von der ersten Richtung abweichenden, zweiten Richtung ausführen kann. Bei einer Relativbewegung des Tisches zum Mittelteil erfährt der Tisch daher eine Abstandsänderung in Bezug auf die Basis, wobei durch eine entsprechende Wahl der Steigungen eine gewünschte Übersetzung einstellbar ist.

## Beschreibung

### Technisches Gebiet

Die Erfindung betrifft eine verstellbare Vorrichtung, umfassend einen Tisch, eine Basis, ein Mittelteil und einen Antrieb, wobei das Mittelteil in Bezug auf die Basis in einer ersten Richtung beweglich gelagert und der Antrieb zur Erzeugung einer Relativbewegung zwischen Mittelteil und Tisch ausgebildet ist. Weiter betrifft die Erfindung ein Verfahren zur Verstellung einer Vorrichtung, umfassend einen Tisch, eine Basis, ein Mittelteil und einen Antrieb.

### Stand der Technik

Vorrichtungen zur Verstellung eines Tisches oder eines anderen Gegenstandes, beispielsweise zur Verstellung der Höhe, gibt es sehr viele auf dem Markt. Aber viele dieser Vorrichtungen sind entweder zu unpräzise, zu langsam, bauen zu hoch oder sind sonst für viele Anwendungen ungeeignet. Insbesondere für Hubbewegungen von Maschinentischen in Schleifmaschinen zum Hinterschleifen von Werkstücken gibt es keine geeigneten Lösungen, die eine schnelle und präzise Hubbewegung bei geringer Bauhöhe ermöglichen.

### Darstellung der Erfindung

Aufgabe der Erfindung ist es, eine dem eingangs genannten technischen Gebiet zugehörende Vorrichtung bzw. sein entsprechendes Verfahren zu schaffen, welche eine geringe Bauhöhe aufweist, präzise und steif ausgebildet ist und so eine schnelle Hubbewegung des Tisches ermöglicht.

Die Lösung der Aufgabe ist durch die Merkmale des Anspruchs 1 definiert. Gemäss der Erfindung weist bei einer verstellbaren Vorrichtung wie eingangs erwähnt das Mittelteil auf einer dem Tisch zugewandten Seite einen ersten Abschnitt mit einer Steigung grösser als Null auf und der Tisch weist auf einer dem Mittelteil zugewandten Seite einen dem ersten Abschnitt gegenüberliegenden zweiten Abschnitt mit einer negativen Steigung auf. Weiter ist der Tisch derart gelagert, dass eine Bewegung des Tisches ausschliesslich in einer von der ersten Richtung abweichenden Richtung möglich ist, sodass der Tisch bei einer Relativbewegung zum Mittelteil eine Abstandsänderung in Bezug auf die Basis erfährt.

Hierbei ist die erste Richtung vorzugsweise im Wesentlichen horizontal gewählt und die zweite Richtung im Wesentlichen senkrecht und damit auch senkrecht zur ersten Richtung. Das heisst typischerweise erfolgt die Bewegung des Mittelteils in horizontaler und die Positionsänderung des Tisches in senkrechter Richtung. Der Einfachheit halber wird die Erfindung nachfolgend - sofern nichts anderes erwähnt ist und ohne einschränkende Wirkung auf den Schutzbereich - für den Fall beschrieben, dass die erste Richtung horizontal und die zweite Richtung senkrecht dazu, also vertikal ist. Dies ist aber nicht zwingend. Die Vorrichtung kann beispielsweise als Ganzes in einem Winkel angeordnet sein, sodass die erste Richtung nicht mit der Horizontalen übereinstimmt und auch der Winkel zwischen der ersten und der zweiten Richtung kann vom rechten Winkel abweichen. Die Vorrichtung kann insbesondere auch derart angeordnet sein, dass die Basis, das Mittelteil und der Tisch im Wesentlichen senkrecht, also stehend und nicht liegend angeordnet sind, wobei die Positionsänderung des Tisches in diesem Fall nicht in vertikaler, sondern in horizontaler Richtung erfolgt, indem das Mittelteil entweder in horizontaler oder auch vertikaler Richtung bewegt wird.

Unter dem Begriff "Abschnitt mit einer Steigung grösser als Null" wird hierbei ein Abschnitt der Oberfläche des Mittelteils verstanden, der stetig ansteigt. Je nach Blickwinkel kann dies natürlich auch als Abfallen bezeichnet werden. Die Steigung muss hierbei nicht konstant sein, sondern kann beispielsweise von einem Ende zum anderen grösser oder kleiner werden oder sie kann dazwischen ein- oder mehrfach grösser und kleiner werden.

Häufig wird das Mittelteil wie auch der Tisch im Wesentlichen translationssymmetrisch ausgebildet sein. Das heisst, der Querschnitt ist über die Breite des entsprechenden Elements oder zumindest einen Teil davon im Wesentlichen gleich. Entsprechend ist der Begriff "Abschnitt mit einer Steigung grösser als Null" so zu verstehen, dass dieser Querschnitt in einem solchen Abschnitt stetig ansteigt bzw. eben abfällt.

Wie erwähnt sind das Mittelteil und der Tisch nun gegenseitig derart angeordnet, dass sich die beiden Steigungsabschnitte gegenüberliegen. Da die Steigung des ersten Abschnitts am Mittelteil positiv ist

Dadurch, dass die Vorrichtung nur wenige Elemente umfasst, welche zudem solide realisierbar sind, weist die Vorrichtung eine hohe Steifigkeit auf. Durch den Winkel zwischen dem Mittelteil und dem in der Höhe zu verstellenden Tisch ergibt sich durch die horizontale Relativbewegung zwischen dem Mittelteil und dem Tisch zudem eine Übersetzung der Antriebskraft. Durch eine den Anforderungen an die konkrete Anwendung angepasste Wahl des Winkels bzw. des Steigungsverlaufs der beiden sich gegenüberliegenden Abschnitte des Mittelteils und des Tisches, kann die gewünschte Übersetzung eingestellt werden. All dies ermöglicht eine schnelle und präzise Positionsverstellung des Tisches, sowohl beim Anheben als auch beim Absenken.

Durch die flache Konstruktion der Vorrichtung baut diese zudem sehr niedrig bzw. flach, sodass sie - egal in welcher Position sie angeordnet ist - wenig Platz in der Bewegungsrichtung des Tisches benötigt.

Als Antrieb kann grundsätzlich jeder geeignete Antrieb verwendet werden, um das Mittelteil oder den Tisch in eine horizontale Bewegung zu versetzen. Je nach Anwendung sind elektrische, aber auch hydraulische, pneumatische oder sonstige Antriebe denkbar. Bei vielen Anwendungen wie etwa im Bereich von elektrischen Maschinen sind aber Elektromotoren die bevorzugte Antriebsart. Dies kann ein Gleichstrom- oder auch ein Wechsel- bzw. Drehstrommotor sein. Auch bei der Wahl der Bauart ist der Fachmann grundsätzlich frei. Er kann beispielsweise einen Drehstrommotor mit einem drehenden Magnetfeld einsetzen. Da mit dem Antrieb jedoch eine translatorische Bewegung entlang einer definierten Strecke erreicht werden soll, sind Linearmotoren mit ihrem Wanderfeld als Antrieb besonders bevorzugt.

Die Anordnung des Antriebs kann hierbei frei gewählt werden. Viele Antriebe sind jedoch derart ausgebildet, dass sie in einer Dimension geringere Ausmasse haben als in den anderen beiden Dimensionen. Um eine möglichst geringe Bauhöhe der Vorrichtung zu erreichen, wird daher der Antrieb vorzugsweise in der ersten Richtung angeordnet. D.h. derart, dass der Antrieb die kleinstmögliche Ausdehnung in der zweiten Richtung, beispielsweise senkrecht zur Horizontalen aufweist.

Dies gilt insbesondere auch für Linearmotoren, die in Längsrichtung meist deutlich grösser bzw. eben länger sind als in den beiden Richtungen quer zu ihrer Längsrichtung, d.h. in ihrer Breite und Höhe.

Um eine möglichst einfache Konstruktion zu erreichen, sind die beiden Steigungsabschnitte mit Vorteil derart ausgebildet, dass sie eine konstante Steigung aufweisen. Zudem weisen beide vorzugsweise die gleiche Steigung auf. Um ein Übersetzungsverhältnis zwischen der Positionsänderung und der Relativbewegung zwischen Mittelteil und Tisch zu erreichen, das kleiner ist als eins, wird die Steigung vorzugsweise derart gewählt, dass der Winkel zur Horizontalen kleiner ist als 45°, er soll insbesondere zwischen 0° und 30°, vorzugsweise zwischen 10° und 20° liegen. Am meisten bevorzugt ist ein Winkel um die 15°, d. h. ein Winkel zwischen etwa 14° und 16°, da sich gezeigt hat, dass bei einem solchen Winkel ein guter Kompromiss zwischen der Geschwindigkeit und der Präzision der Positionsänderung erreicht werden kann, ohne die Stabilität und Steifigkeit der Vorrichtung zu gefährden.

In einer möglichen Ausführungsform der Erfindung umfasst das Mittelteil genau einen ersten Abschnitt und der Tisch genau einen zweiten Abschnitt, wobei sich die beiden Abschnitte über einen grossen oder gar den gesamten Bereich der Länge des Mittelteils bzw. des Tisches erstrecken. In einer bevorzugten Ausführungsform der Erfindung umfasst das Mittelteil jedoch mehr als einen ersten Abschnitt und der Tisch entsprechend mehr als einen zweiten Abschnitt. Die Anzahl der Abschnitte wird hierbei gleich gewählt und die Abschnitte sind derart angeordnet, dass jeweils ein erster Abschnitt des Mittelteils einem zweiten Abschnitt des Tisches gegenüber liegt. Das ergibt so eine Art sägezahnartige Struktur der beiden sich gegenüberliegenden Oberflächen von Mittelteil und Tisch. Auf diese Weise kann der Druck gleichmässiger verteilt und die Stabilität der Vorrichtung und damit deren Präzision erhöht werden.

Eine solche Vorrichtung ist sehr vielseitig einsetzbar, z. B. bei einem Arbeitstisch, bei einer Hebebühne oder auch als Wagenheber. Sie ist generell überall dort einsetzbar, wo Gegenstände angehoben oder abgesenkt werden müssen.

Im Zusammenhang mit der Erfindung ist unter dem Begriff Tisch daher nicht zwingend ein herkömmlicher Tisch mit einer Tischplatte und einem oder mehreren Beinen zu verstehen. Unter dem Begriff Tisch ist auch ein Gegenstand zu verstehen, der eine noch oben ausgerichtete Oberfläche umfasst, auf welcher andere Gegenstände oder Elemente vollständig positioniert oder auch nur teilweise abgestützt werden können. Soll der Gegenstand vollständig auf dem Tisch positioniert werden, umfasst der Tisch mit Vorteil eine im Wesentlichen flache und typischerweise ebene Oberfläche. Ohne von der Erfindung abzuweichen ist es natürlich auch möglich, dass der anzuhebende oder abzusenkende Gegenstand nicht auf dem Tisch angeordnet ist, sondern irgendwo am Tisch befestigt ist, beispielsweise an einer Seite oder auch an der Unterseite des Tisches.

Die Erfindung ist mit Vorteil insbesondere dort einsetzbar, wo eine schnelle und präzise Höhenänderung notwendig ist. Dies ist insbesondere bei Maschinen der Fall, wo ein Maschinenelement angehoben oder abgesenkt werden muss. Bei dem Tisch handelt es sich daher vorzugsweise um einen Maschinentisch, insbesondere einen Maschinentisch zum Tragen eines Maschinenelements wie zum Beispiel einer Spindel zur Aufnahme von Werkstücken oder Werkzeugen zur spanabnehmenden Bearbeitung.

Es wird angemerkt, dass der Begriff Höhenänderung im Folgenden auch für Positionsänderungen verwendet wird, welche nicht senkrecht sind.

Je nach Anwendung können Mittelteil und Tisch derart ausgebildet sein, dass eine Höhenänderung im Bereich von Metern oder gar deutlich darüber, oder auch im Bereich von Mikrometern erreicht werden kann. Bei einer bevorzugten Ausführungsform der Erfindung, wie etwa bei der Anwendung in Maschinen zur Bearbeitung oder Herstellung von Schleif- oder anderen Werkzeugen beträgt eine maximale Höhenänderung weniger als 20 Millimeter, insbesondere weniger als 10 Millimeter. Eine maximale Höhenänderung von weniger als 5 Millimeter, wie dies bei derartigen Bearbeitungsmaschinen oft der Fall ist, ist dabei besonders bevorzugt.

Die erfindungsgemässe, höhenverstellbare Vorrichtung umfasst mit Vorteil eine erste Führungsvorrichtung zur Führung des Mittelteils in Bezug auf die Basis. D. h. die Bewegung des Mittelteils relativ zur Basis erfolgt geführt, sodass diese Relativbewegung ausschliesslich in einer gewünschten bzw. vordefinierten Art und Weise, insbesondere ausschliesslich in der gewünschten Richtung erfolgt.

Die Vorrichtung umfasst mit Vorteil auch eine zweite Führungsvorrichtung zur Führung des Tisches in Bezug auf das Mittelteil, sodass deren Relativbewegung geführt, d. h. in einer gewünschten bzw. vordefinierten Art und Weise erfolgt.

Weiter umfasst die Vorrichtung mit Vorteil auch eine dritte Führungsvorrichtung zur Führung des Tisches in der zweiten Richtung. Diese ist typischerweise derart ausgebildet, dass sich der Tisch ausschliesslich in genau der definierten Richtung, vorliegend eben in der zweiten Richtung bewegt.

An dieser Stelle sei angemerkt, dass die gewünschte Bewegung des Tisches nicht zwingend vertikal bzw. senkrecht zur Bewegungsrichtung des Mittelteils sein muss. Es ist wie eingangs bereits erwähnt grundsätzlich auch möglich, dass eine Positionsänderung des Tisches gewünscht ist, die von der Vertikalen mehr oder weniger abweicht oder gar horizontal ist. Die Führungsvorrichtung kann beispielsweise derart ausgebildet sein, dass sich der Tisch in Bezug auf die Bewegungsrichtung des Mittelteils in einem Winkel von beispielsweise 60° bewegt.

Es ist aber selbstverständlich auch möglich, die Relativbewegung zwischen Mittelteil und Basis, zwischen Mittelteil und Tisch sowie auch die Höhen- bzw. Abstandsänderung des Tisches ohne solche Führungsvorrichtungen zu realisieren.

Wie beschrieben muss der Tisch derart gelagert sein, dass er sich ausschliesslich in der gewünschten Richtung bewegt. Hierzu sind bei einer bevorzugten Ausführungsform der Erfindung entsprechende Anschläge vorgesehen, die typischerweise an der Basis oder an einem in Bezug auf die Basis räumlich fixierten Element befestigt sind. Weiter umfasst die dritte Führungsvorrichtung auf zwei in der ersten Richtung liegenden, entgegengesetzten Seiten des Tisches je eine Führung. Die Anschläge und diese Führungen sind hierbei derart angeordnet, dass sich jeweils eine der beiden Führungen zwischen dem Tisch und einem der beiden Anschläge befindet.

Bei Führungsvorrichtungen kann aufgrund der Lagerart grob zwischen Gleit- und Wälzführungen unterschieden werden, wobei beide Führungsarten in vielen verschiedenen Ausführungsformen existieren, sodass je nach gewünschter Anwendung die geeignetste Art gewählt werden kann. Für Anwendungen im Bereich der Höhenverstellung eines Maschinentisches sind Wälzführungen bevorzugt, da sie typischerweise eine geringere Reibung und weniger Verschleiss aufweisen. Vorzugsweise umfasst daher jede der oben erwähnten Führungsvorrichtungen eine Wälzführung, bei welcher einer oder mehrere Wälzkörper vorhanden sind auf denen die bewegten Elemente direkt oder indirekt auf einer entsprechenden Halterung abrollen.

Antrieb und Führungen können als separate Einheiten ausgebildet und voneinander getrennt oder auch räumlich nahe beieinander angeordnet sein. Der Antrieb sorgt hierbei für die Bewegung und die Führung für die Einhaltung der gewünschten Richtung.

Bei einer weiter bevorzugten Ausführungsform der Erfindung ist der Antrieb in Kombination mit der ersten oder der zweiten Führungsvorrichtung ausgebildet. Dies ist insbesondere vorteilhaft, wenn der Antrieb als Linearmotor ausgebildet ist. Ein solcher Linearmotor umfasst typischerweise einen längs ausgerichteten Stator mit den Magneten und einen Läufer mit den Spulen (der dem Rotor eines Drehfeldmotors entspricht). Bei einer kombinierten Ausführung ist jeweils eines dieser Elemente mit dem Mittelteil und das andere Element mit der Basis oder dem Tisch verbunden. Da der Läufer durch den Stator geführt wird ist so gleichzeitig zum Antrieb auch die Führung realisierbar. Oder eines der beiden Elemente ist als Wälzkörper ausgebildet oder umfasst solche Wälzkörper, welche auf dem Mittelteil und/oder dem Tisch bzw. der Basis abrollen.

In Bezug auf die Vorrichtung ist die Lösung der Aufgabe durch die Merkmale des Anspruchs 14 definiert.

Gemäss der Erfindung wird mit dem Antrieb eine Relativbewegung zwischen dem Mittelteil und dem Tisch in der ersten Richtung erzeugt, sodass durch diese Relativbewegung ein auf einer dem Tisch zugewandten Seite des Mittelteils angeordneter erster Abschnitt mit einer Steigung grösser als Null und ein dem ersten Abschnitt gegenüberliegender, auf einer dem Mittelteil zugewandten Seite des Tisches angeordneter zweiter Abschnitt mit einer negativen Steigung aneinander entlang gleiten. Hierbei wird der Tisch derart gelagert, dass er sich ausschliesslich in der von der ersten Richtung abweichenden, zweiten Richtung bewegt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

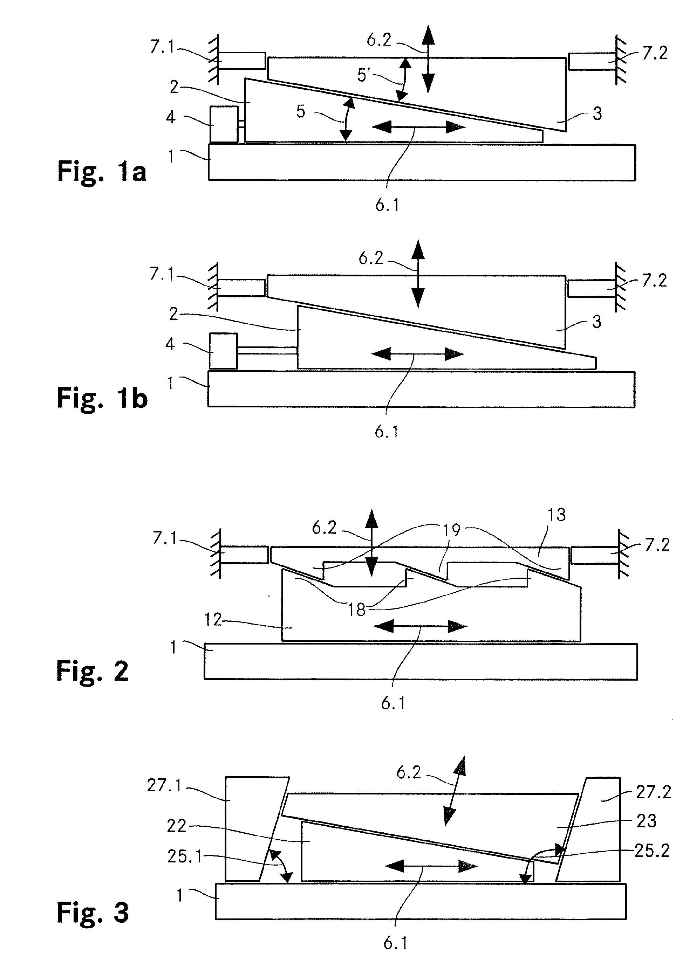

- Fig. 1a: eine schematische Darstellung einer ersten erfindungsgemässen Höhenverstellung in einer abgesenkten Position;
- Fig. 1 b: eine schematische Darstellung der ersten erfindungsgemässen Höhenverstellung in einer angehobenen Position;
- Fig. 2: eine schematische Darstellung einer zweiten erfindungsgemässen Höhenverstellung;
- Fig. 3: eine schematische Darstellung einer dritten erfindungsgemässen Höhenverstellung;
- Fig. 4: eine schematische Darstellung eines Teils einer Schleifmaschine mit einer erfindungsgemässen Höhenverstellung eines Maschinentisches mit einem schrägen Abschnitt;
- Fig. 5: eine schematische Darstellung einer weiteren erfindungsgemässen Höhenverstellung eines Maschinentisches mit mehreren schrägen Abschnitten;
- Fig. 6: eine vergrösserte, schematische Darstellung eines Ausschnitts aus Fig. 5 sowie
- Fig. 7: das Mittelstück der Vorrichtung aus Fig. 5 in einer schematischen, dreidimensionalen Ansicht;
- Fig. 8: eine schematische Darstellung einer kombinierten Antriebs- und Führungseinheit.

Grundsätzlich sind in den Figuren gleiche Teile mit gleichen Bezugszeichen versehen.

### Wege zur Ausführung der Erfindung

Fig. 1a und 1b zeigen eine schematische Darstellung einer ersten erfindungsgemässen Höhenverstellung. In Fig. 1a ist sie in einer abgesenkten Position und in Fig. 1b in einer angehobenen Position dargestellt. Diese höhenverstellbare Vorrichtung umfasst eine Basis 1, ein Mittelstück 2 sowie einen Tisch 3. Das Mittelstück 2 ist keilförmig ausgebildet, wobei ein erster Schenkel dieses Keils parallel zur Oberfläche der Basis 1 ausgerichtet ist und der zweite Schenkel mit dem ersten Schenkel einen Winkel 5 von ca. 15° einschliesst. Das Mittelstück 2 ist weiter horizontal beweglich auf der Basis 1 gelagert, was durch den Doppelpfeil 6.1 angedeutet ist. Die horizontale Bewegung des Mittelstücks erfolgt in der Darstellung gemäss Fig. 1 von links nach rechts bzw. umgekehrt. Der Tisch 3 ist ebenfalls keilförmig ausgebildet, wobei der Winkel 5' zwischen dessen beiden Schenkeln identisch ist mit dem Winkel 5 des Mittelstücks 2. Der Tisch liegt nun derart auf dem Mittelstück 2 auf, dass ein erster Schenkel parallel zum zweiten Schenkel des Mittelstücks ausgerichtet ist und er zweite Schenkel horizontal zu liegen kommt. Der Tisch ist, wenn man so will, umgekehrt ausgerichtet wie das Mittelstück. Weiter sind ein linker Anschlag 7.1 und ein rechter Anschlag 7.2 vorgesehen, welche eine horizontale Bewegung des Tisches 3 verhindern.

Diese Höhenverstellung umfasst einen an der Basis 1 angeordneten Antrieb 4, mit welchem das Mittelstück 2 horizontal bewegt werden kann. Der Antrieb 4 umfasst beispielsweise einen kleinen Elektromotor, der das Mittelstück über ein entsprechendes Getriebe in Bewegung versetzt. Dieses Getriebe kann beispielsweise eine Spindel mit passender Gewindemutter im bzw. am Mittelstück umfassen oder es kann ein reines Zahnradgetriebe sein. Gurt-, Ketten- oder Riemenantriebe sind natürlich ebenfalls möglich wie andere, hier nicht aufgeführte Antriebe. Der Antrieb kann auch am oder in der Basis bzw. auch am oder im Mittelstück angeordnet sein und beispielsweise Wälzkörper antreiben, auf denen dann das Mittelstück abrollt bzw. die dann auf der Basis abrollen.

Wird nun das Mittelstück 2 mit dem Antrieb 4 nach links bewegt, wie dies in Fig. 1a dargestellt ist, senkt sich der Tisch 3 ab, weil der Tisch 3 sozusagen entlang dem zweiten Schenkel des Mittelstücks 2 nach unten gleitet. Bei einer Bewegung des Mittelstücks 2 nach rechts, wie dies in Fig. 1 b dargestellt ist, wird der Tisch 3 entlang dem zweiten Schenkel des Mittelstücks nach angehoben. Sowohl beim Absenken wie auch bei Anheben wird eine horizontale Bewegung des Tisches 3 durch die Anschläge 7.1 und 7.2 verhindert, sodass der Tisch 3 ausschliesslich eine vertikale Bewegung ausführen kann. Dies ist durch den Doppelpfeil 6.2 angedeutet.

Fig. 2 zeigt eine schematische Darstellung einer zweiten erfindungsgemässen Höhenverstellung. Das Mittelstück 12 ist in diesem Beispiel sägezahnartig ausgebildet. D. h. es umfasst auf seiner Oberseite drei nach oben weisende und von rechts nach links ansteigende Zacken 18, wobei der Anstiegswinkel in diesem Beispiel etwas grösser, nämlich ca. 20° gewählt ist. Entsprechend dem Mittelstück 12 umfasst der Tisch 13 auf seiner Unterseite drei nach unten weisende und von links nach rechts abfallende Zacken 19, wobei der Abfallwinkel dem Anstiegswinkel der Zacken 18 entspricht. Die Zacken 18 bzw. 19 sind hierbei derart angeordnet, dass sich je ein Zacken 18 und ein Zacken 19 gegenüber und mit ihren abgeschrägten Kanten aneinander liegen.

Das Anheben bzw. Absenken des Tisches 13 erfolgt ebenfalls durch eine horizontale Verschiebung des Mittelstücks 12, wobei in Fig. 2 kein Antrieb dargestellt ist.

Fig. 3 zeigt eine schematische Darstellung einer dritten erfindungsgemässen Höhenverstellung. Diese ist der Höhenverstellung aus den Figuren 1 und 2 sehr ähnlich. Im Unterschied zu diesen sind die Anschläge 27.1 und 27.3 aber anders ausgebildet. Die Fläche des Anschlags 27.1 an welcher der Tisch 23 entlang bewegt wird, weist in diesem Fall gegenüber der Horizontalen einen Winkel auf, der von 90° verschieden ist. Im dargestellten Beispiel beträgt der Winkel 25.1 etwa 75°. Der entsprechende Winkel 25.2 des Anschlags 27.2 ist der Supplementärwinkel zum Winkel 25.1 und beträgt hier folglich 105°. Bei einer horizontalen Bewegung des Mittelstücks 22 wird der Tisch 23 daher nicht in der Vertikalen, sondern in einem Winkel von 75° gegenüber der Horizontalen nach oben bzw. unten bewegt. Die Anschläge 27.1 und 27.2 sind in diesem Beispiel direkt auf der Basis 1 befestigt. Der Antrieb ist auch hier nicht dargestellt.

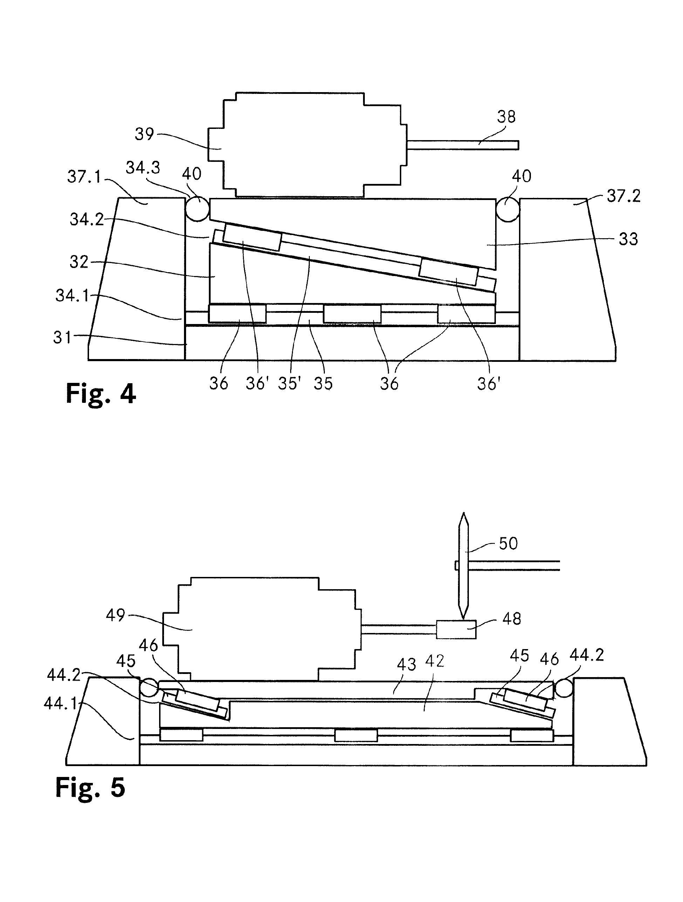

Fig. 4 zeigt schematisch in einer seitlichen Ansicht eine konkrete Anwendung der Erfindung zur Höhenverstellung eines Maschinentisches 33 einer Bearbeitungsmaschine, konkret einer Schleifmaschine. Auf dem Maschinentisch 33 ist entsprechend eine Spindel 39 angeordnet, die beispielsweise zur Aufnahme eines Werkzeugs 38 ausgebildet ist, wobei mit dem Werkzeug 38, das von der Spindel 39 in eine Rotation versetzbar ist, ein zugeführtes Werkstück bearbeitbar ist. Die Spindel 39 kann aber selbstverständlich auch zur Aufnahme eines Werkstücks ausgebildet sein, das durch die Spindel 39 in Drehung versetzt und mit einem zugeführten Werkzeug bearbeitbar ist (nicht dargestellt).

Diese Höhenverstellung umfasst wie das Beispiel aus den Fig. 1a und 1b lediglich einen schrägen Abschnitt. Im Gegensatz zu den Figuren 1a und 1 b sind bei diesem Beispiel aber mehrere Führungsvorrichtungen dargestellt. Eine erste Führungsvorrichtung 34.1 ist zwischen der Basis 31 und dem Mittelstück 32 angeordnet. Eine zweite Führungsvorrichtung 34.2 ist zwischen dem Mittelstück 32 und dem Maschinentisch 33 angeordnet und eine dritte Führungsvorrichtung 34.3 ist zwischen dem Maschinentisch 33 und den beiden Anschlägen 37.1 und 37.2 angeordnet.

Die erste Führungsvorrichtung 34.1 umfasst eine Schiene 35, die fest mit der Basis 31 verbunden ist sowie drei Schlitten 36, die fest mit dem Mittelstück 32 verbunden sind. Schiene 35 und Schlitten 36 sind hierbei derart ausgebildet, dass die Schlitten 36 mehr oder weniger spielfrei auf der Schiene 35 hin und her bewegbar sind. Dabei können die Schlitten 36 entweder direkten Kontakt zur Schiene 35 haben oder sie umfassen entsprechende Wälzkörper, beispielsweise Räder, Kugeln oder Rollen, auf welchen die Schlitten 36 auf der Schiene 35 abrollen. Im Prinzip können solche Wälzkörper anstatt am Schlitten 36 auch an der Schiene 35 angeordnet sein.

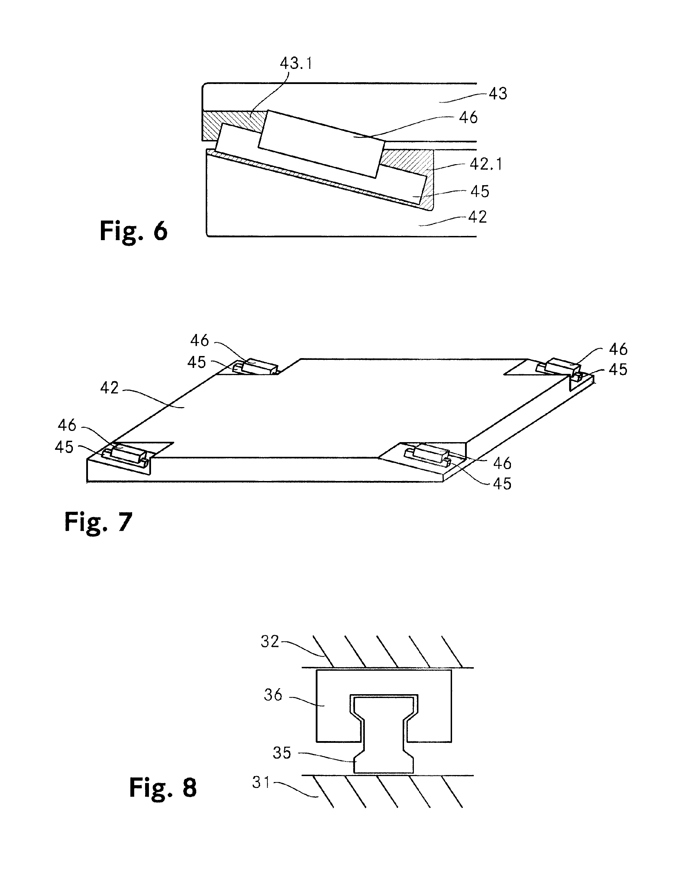

Eine beispielhafte, schematische Ansicht einer Schiene 35 mit darauf laufendem Schlitten 36 ist in Fig. 8 gezeigt. Die Schiene 35 hat beispielsweise eine Art Doppel-T-förmigen Querschnitt und der Schlitten 36 hat einen C-förmigen Querschnitt. Hierbei umfasst der C-förmige Schlitten mit seiner Öffnung eines der T-förmigen Enden der Schiene, wobei die äussere Form dieses T-förmigen Endes der Schiene 35 und die innere Form des C-förmigen Schlittens 36 so aufeinander abgestimmt sind, dass der Schlitten 36 praktisch spielfrei auf der Schiene 35 läuft.

Die zweite Führungsvorrichtung 34.2 ist sehr ähnlich ausgebildet wie die erste Führungsvorrichtung 34.1, wobei jedoch die Schiene 35' am Mittelstück befestigt ist und nicht drei, sondern nur zwei Schlitten 36' am Maschinentisch 33 befestigt sind.

Wie oben erwähnt, ist die Darstellung in Fig. 4 als Seitenansicht gewählt. D.h. Basis 31, Mittelstück 32 wie auch der Maschinentisch 33 und die Anschläge 37.1, 37.2 haben eine in dieser Ansicht nicht sichtbare Ausdehnung in der Tiefe. Entsprechend können mehrere erste und zweite Führungsvorrichtungen vorgesehen sein, die parallel zueinander und in der Darstellung gemäss Fig. 4 hintereinander angeordnet sind, sodass jeweils nur die vordersten Führungsvorrichtungen erkennbar sind. Vorzugsweise sind zwischen Basis 31 und Mittelstück 32 zwei Führungsvorrichtungen 34.1 vorgesehen, je eine im Bereich der vorderen bzw. hinteren Kante des Mittelstücks 32 und auch zwischen Mittelstück 32 und Maschinentisch 33 sind vorzugsweise zwei Führungsvorrichtungen 34.2 vorgesehen, je eine im Bereich der vorderen bzw. hinteren Kante des Mittelstücks 32 bzw. des Maschinentisches 33. Da auch die Figuren 1, 2, 3, 5 und 6 eine Seitenansicht darstellen gilt dort entsprechendes.

Bei beiden Führungsvorrichtungen 34.1, 34.2 ist es aber auch möglich, Schiene 35, 35' und Schlitten 36, 36' gegeneinander auszutauschen, d. h. die Schiene 35 am Mittelstück 32 bzw. die Schiene 35' am Maschinentisch 33 und entsprechend die Schlitten 36 an der Basis 31 bzw. die Schlitten 36' am Mittelstück 32 anzuordnen.

Die dritte Führungsvorrichtung 34.3 ist etwas anders ausgebildet. Sie umfasst lediglich zwei Wälzkörper, die in diesem Beispiel als Rollen 40 ausgebildet sind, welche in der Darstellung gemäss Figur 4 nur im Querschnitt sichtbar sind. Eine Rolle 40 ist zwischen dem Anschlag 37.1 und der linken Seite des Maschinentisches 33 und eine Rolle 40 zwischen dem Anschlag 37.2 und der linken Seite des Maschinentisches 33 angeordnet.

Anstelle der Rollen 40 kann die Führungsvorrichtung zwischen jeweils einem der Anschläge 37.1, 37.2 und dem Maschinentisch eine oder mehrere Führungsvorrichtungen 34.1, 34.2 umfassen.

Als Antrieb sind in diesem Beispiel die Schiene 35' in Kombination mit den Schlitten 36' ausgebildet. Schiene 35' und Schlitten 36' bilden zusammen einen Linearmotor, wobei die Schiene 35' den Stator und die Schlitten 36' jeweils einen Läufer bilden.

Die Führungsvorrichtungen zur Führung des Mittelteils in Bezug auf die Basis bzw. des Tisches in Bezug auf das Mittelteil sind beispielsweise aber auch fluidische Führungen einsetzbar. Hierbei können sowohl fluidstatische als auch fluiddynmaische Führungen verwendet werden. Dies ist insbesondere ebenfalls dann von Vorteil, wenn solche Führungen in Kombination mit entsprechenden fluidischen Antrieben eingesetzt werden.

Fig. 5 zeigt eine schematische Darstellung einer weiteren erfindungsgemässen Höhenverstellung eines Maschinentisches 43, welche sehr ähnlich der Höhenverstellung aus Fig. 4 ist. Im Unterschied zu jener umfasst diese hier mehrere, konkret zwei schräge Abschnitte - je einen auf der linken bzw. rechten Seite der Vorrichtung. Während die erste Führungsvorrichtung 44.1 praktisch gleich ist wie die Führungsvorrichtung 34.1, ist die zweite Führungsvorrichtung etwas anders ausgebildet. Sie ist unterteilt in je eine Führung 44.2 pro schrägen Abschnitt, ist ansonsten aber wiederum gleich ausgebildet wie die anderen Führungsvorrichtungen. D.h. jede Führung 44.2 umfasst eine Schiene 45, die in diesem Fall einfach etwas kürzer ist sowie einen auf der Schiene 45 laufenden Schlitten 46.

Fig. 5 zeigt weiter ein Werkstück 48, das in die Spindel 49 eingesetzt ist und mit einer extern angetriebenen Schleifscheibe 50 bearbeitbar ist. Bei dem Werkstück 48 handelt es sich beispielsweise um ein Werkzeug mit Hinterschliff (mit einem sich spiralig verjüngenden Durchmesser entlang der Freifläche), wie etwa einen Gewindebohrer oder einen Abwälzfräser. Werkzeugschleifmaschinen zur Produktion von solchen Werkzeugen benötigen einen schnellen Hub des Maschinentisches.

Fig. 6 zeigt eine vergrösserte, schematische Darstellung eines Ausschnitts aus Fig. 5 zum besseren Verständnis. Im Gegensatz zur Fig. 5 ist hier erkennbar, dass sowohl das Mittelstück 42 als auch der Maschinentisch 43 nicht über ihre gesamte Tiefe denselben Querschnitt aufweisen.

Sowohl beim Mittelstück 42 wie auch beim Maschinentisch 43 nimmt der jeweilige schräge Abschnitt nur einen kleinen Bereich an der jeweiligen vorderen bzw. hinteren Kante ein. Dazwischen, dargestellt durch die beiden schraffierten Bereiche 42.1, 43.1, sind das Mittelstück 42 und der Maschinentisch 43 nicht abgeschrägt.

Fig. 7 zeigt das Mittelstück 42 der Vorrichtung aus Fig. 5 in einer schematischen, dreidimensionalen Ansicht. In dieser ist gut erkennbar, dass das Mittelstück 42 im Wesentlichen rechteckig ausgebildet ist und in jeder Ecke einen derartigen schrägen Abschnitt umfasst. Weiter sind in Fig. 7 die in den abgeschrägten Abschnitten positionierten Führungen mit den am Mittelstück 42 befestigten Schienen 45 und den jeweils zugehörigen, am Maschinentisch 43 befestigen Schlitten 46 dargestellt.

Auch der in Fig. 7 nicht dargestellte Maschinentisch 43 ist entsprechend im Wesentlichen rechteckig ausgebildet und umfasst in seinen Ecken die entsprechenden Abschrägungen, an welchen eben diese Schlitten 46 befestigt sind.

Für eine präzise Bewegung des Tisches sorgt hierbei eine Steuerung, welche den oder die vorhandenen Antriebe derart steuert, dass der Tisch die gewünschte Bewegung ausführt. Die Steuerung der Antrieb kann dabei durch eine ohnehin vorhandene Steuerung wie beispielsweise einer Maschinensteuerung übernommen werden oder es ist hierfür eine separate Steuerung vorgesehen.

Selbstverständlich kann die gesamte Vorrichtung auch auf einer bewegbaren Halterung montiert sein, sodass sie als Ganzes in einer, zwei oder auch drei verschiedenen Raumrichtungen verfahrbar ist.

Zusammenfassend ist festzustellen, dass es die Erfindung ermöglicht, einen Tisch oder einen sonstigen Gegenstand präzise und schnell anzuheben bzw. abzusenken, wobei insgesamt eine äusserst flache Bauhöhe erreichbar ist, da sowohl der Antrieb wie auch die Führungen waagrecht angeordnet werden können. Eine entsprechend ausgebildete Schleifmaschine kann mit Hilfe der Erfindung äusserst präzise und schnelle Hubbewegungen ausführen, sodass solche Schleifmaschinen bestens geeignet sind zum Bearbeiten von Gewindebohrern oder Abwälzfräsern oder auch anderen Werkstücken mit Hinterschliff.

## Patentansprüche

1. Verstellbare Vorrichtung, umfassend einen Tisch, eine Basis, ein Mittelteil und einen Antrieb, wobei das Mittelteil in Bezug auf die Basis in einer ersten Richtung beweglich gelagert und der Antrieb zur Erzeugung einer Relativbewegung zwischen Mittelteil und Tisch ausgebildet ist, **dadurch gekennzeichnet, dass** das Mittelteil auf einer dem Tisch zugewandten Seite einen ersten Abschnitt mit einer Steigung grösser als Null und der Tisch auf einer dem Mittelteil zugewandten Seite einen dem ersten Abschnitt gegenüberliegenden zweiten Abschnitt mit einer negativen Steigung aufweist, der Tisch derart gelagert ist, dass ausschliesslich eine Bewegung in einer von der ersten Richtung abweichenden, zweiten Richtung möglich ist, sodass der Tisch bei einer Relativbewegung zum Mittelteil eine Abstandsänderung in Bezug auf die Basis erfährt, wobei die erste Richtung vorzugsweise im Wesentlichen horizontal ist und die zweite Richtung vorzugsweise im Wesentlichen senkrecht ist.

2. Vorrichtung nach Anspruch 1, wobei der Antrieb einen Linearmotor umfasst.

3. Vorrichtung nach einem der Ansprüche 1 bis 2, wobei der Antrieb angeordnet ist.

4. Vorrichtung nach einem der Ansprüche 1 bis 3, wobei der erste und der zweite Abschnitt eine gleiche, konstante Steigung aufweisen und der Betrag eines Winkels zwischen einer Horizontalen und dem ersten bzw. zweiten Abschnitt zwischen 0° und 30°, bevorzugt zwischen 10° und 20° und weiter bevorzugt zwischen 14° und 16° liegt.

5. Vorrichtung nach einem der Ansprüche 1 bis 4, wobei das Mittelteil mehrere erste Abschnitte und der Tisch eine der Anzahl erste Abschnitte entsprechende Anzahl zweite Abschnitte aufweist.

6. Vorrichtung nach einem der Ansprüche 1 bis 5, wobei der Tisch als Maschinentisch ausgebildet ist, insbesondere zum Tragen eines Maschinenelements wie zum Beispiel einer Spindel zur Aufnahme von Werkstücken oder Werkzeugen zur spanabnehmenden Bearbeitung.

7. Vorrichtung nach einem der Ansprüche 1 bis 6, wobei eine maximale Höhenänderung weniger als 50 Millimeter, bevorzugt weniger als 15 Millimeter und weiter bevorzugt weniger als 6 Millimeter beträgt.

8. Vorrichtung nach einem der Ansprüche 1 bis 7, wobei sie eine erste Führungsvorrichtung zur Führung des Mittelteils in Bezug auf die Basis umfasst.

9. Vorrichtung nach einem der Ansprüche 1 bis 8, wobei sie eine zweite Führungsvorrichtung zur Führung des Tisches in Bezug auf das Mittelteil umfasst.

10. Vorrichtung nach einem der Ansprüche 1 bis 9, wobei sie eine dritte Führungsvorrichtung zur Führung des Tisches in der zweiten Richtung umfasst.

11. Vorrichtung nach Anspruch 10, wobei die dritte Führungsvorrichtung auf zwei in der ersten Richtung liegenden, entgegengesetzten Seiten des Tisches je eine Führung und die Vorrichtung zwei Anschläge derart umfasst, dass je eine Führung zwischen dem Tisch und je einen Anschlag angeordnet ist.

12. Vorrichtung nach einem der Ansprüche 8, 9 oder 10, wobei jede Führungsvorrichtung eine oder mehrere Wälzführungen umfasst.

13. Vorrichtung nach Anspruch 12, wobei der Antrieb in Kombination mit der ersten oder der zweiten Führungsvorrichtung ausgebildet ist.

14. Verfahren zur Verstellung einer Vorrichtung, umfassend einen Tisch, eine Basis, ein Mittelteil und einen Antrieb, **dadurch gekennzeichnet, dass** mit dem Antrieb eine Relativbewegung zwischen dem Mittelteil und dem Tisch in einer ersten Richtung erzeugt wird, sodass durch diese Relativbewegung ein auf einer dem Tisch zugewandten Seite des Mittelteils angeordneter erster Abschnitt mit einer Steigung grösser als Null und ein dem ersten Abschnitt gegenüberliegender, auf einer dem Mittelteil zugewandten Seite des Tisches angeordneter zweiter Abschnitt mit einer negativen Steigung aneinander entlanggleiten, wobei der Tisch derart gelagert wird, dass er ausschliesslich eine Bewegung in einer von der ersten Richtung abweichenden, zweiten Richtung ausführt, wobei die erste Richtung vorzugsweise im Wesentlichen horizontal gewählt wird und die zweite Richtung vorzugsweise im Wesentlichen senkrecht gewählt wird.
